# EUROPEAN PATENT APPLICATION

(11) **EP 4 722 086 A1**
(43) Date of publication of application: **08.04.2026**
(21) Application number: 24850708.9
(22) Date of filing: 28.06.2024
(51) Int. Cl.: B62D 29/04

(54) **VEHICLE BODY COMPONENT AND MANUFACTURING METHOD THEREFOR, AND VEHICLE**

(30) Priority: 07.08.2023 CN 202310988129
(71) Applicant: Great Wall Motor Company Limited, Baoding, Hebei 071000 (CN)
(72) Inventor: WEI, Chengxiang, Baoding, Hebei 071000 (CN); ZHAO, Yong, Baoding, Hebei 071000 (CN); QIAO, Xianbo, Baoding, Hebei 071000 (CN); LIU, Jiankun, Baoding, Hebei 071000 (CN); LIU, Bin, Baoding, Hebei 071000 (CN)
(74) Representative: Klunker IP Patentanwälte PartG mbB
(86) International application number: PCT/CN2024/102211
(87) International publication number: WO 2025/031057

(57) **Abstract**

A vehicle body component and a manufacturing method therefor, and a vehicle. The vehicle body component comprises a first component (1) and a second component (2) which are connected together; the first component (1) and the second component (2) are both made of a composite material, and are each provided with a plurality of stacked layers (c); the first component (1) and the second component (2) are each provided with a connecting portion located in a connecting region (Q) between the first component (1) and the second component (2), and a body portion located outside the connecting portion; the layers (c) in each body portion are cured together; and in the connecting region (Q), the layers (c) in the two connecting portions are spliced in a staggered mode and are cured and connected together.

## Description

### CROSS-REFERENCE TO RELATED APPLICATIONS

This disclosure claims priority to Chinese Patent Application No. 202310988129.7, filed with the China National Intellectual Property Administration on August 7, 2023, entitled "VEHICLE BODY COMPONENT AND MANUFACTURING METHOD THEREFOR, AND VEHICLE", which is incorporated herein by reference in its entirety.

### TECHNICAL FIELD

The present disclosure relates to the field of vehicle body technologies, and in particular, to a vehicle body component. The present disclosure further relates to a manufacturing method for the aforementioned vehicle body component and a vehicle provided with the aforementioned vehicle body component.

### BACKGROUND

With the development of technology and the increasingly stringent requirements for energy conservation and emission reduction, lightweight vehicle design has become an important aspect of improving competitiveness. Therefore, more and more automobile manufacturers are beginning to try adopting new materials and new process structures in order to reduce the weight of the entire vehicle.

At present, the application of composite materials such as carbon fiber has gradually become an important measure for lightweight vehicle body design. In particular, for new materials with excellent mechanical properties converted from organic fibers through a series of heat treatment processes, carbon fiber composite materials have been applied in numerous vehicle models.

Taking a vehicle covering member made of a carbon fiber composite material as an example, such as a side outer panel and a roof outer panel in a vehicle body, two connecting methods are generally adopted for connecting the side outer panel and the roof outer panel. One method is that after the side outer panel is positioned, adhesive is applied to an overlapping position of the roof outer panel, and then the roof outer panel is bonded to the side outer panel. The other method is, on the basis of the aforementioned method, that an overlapping part between the side outer panel and the roof outer panel is deepened in a Z-direction (a vertical direction of the entire vehicle), and a roof trim strip is further added to seal a notch structure formed after the overlapping part is deepened.

Both of the aforementioned methods may achieve the connection between the side outer panel and the roof outer panel. However, for the first method, since the adhesive undergoes a certain degree of shrinkage during curing, a visible seam is provided between the two components after the adhesive is cured, the seam is unsightly and prone to dust accumulation. For the second method, due to the need for deepening treatment, a relatively large Z-direction space of the entire vehicle is occupied, arrangement of a roof interior trim is impeded, and a cost of components of the vehicle increases accordingly. At the same time, a visible seam is provided in appearance, resulting in an unsightly appearance and dust accumulation at the seam.

### SUMMARY

In view of this, the present disclosure aims to propose a vehicle body component, so as to enable a vehicle body component made of a composite material to achieve a seamless appearance effect.

To achieve the aforementioned objective, a technical solution of the present disclosure is realized as follows.

A vehicle body component includes a first component and a second component connected with the first component, a material of each of the first component and the second component includes a composite material, and the first component and the second component both include a plurality of stacked layers, each of the first component and the second component includes a connecting portion, located in a connecting region between the first component and the second component, and a body portion located outside the connecting portion;
the layers in each body portion are cured together, and in the connecting region, the layers in the two connecting portions are spliced in a staggered manner, and the layers in the two connecting portions are cured and connected together.

Further, a width k of each connecting portion along a connecting direction between the first component and the second component is between 25 mm and 75 mm.

Further, in the connecting region, the layers in the two connecting portions are spliced in a one-to-one correspondence, and seams of adjacent layers are staggered along a connecting direction between the first component and the second component.

Further, in the connecting region, the plurality of layers in one of the connecting portions are stacked and then are spliced with the plurality of stacked layers in the other connecting portion in a staggered manner.

Further, a width t of the seam along the connecting direction between the first component and the second component is less than or equal to 1 mm; and/or,
a distance L between the seams of adjacent layers along the connecting direction between the first component and the second component is greater than or equal to 25 mm.

Further, the material of each of the first component (1) and the second component (2) includes a carbon fiber composite material.

Compared with a conventional technology, the present disclosure has following advantages.

According to the vehicle body component in the present disclosure, the layers in the connecting portion of the first component and the layers in the connecting portion of the second component are spliced in a staggered manner, and then the layers in the two connecting portions are cured and connected together, thereby connecting the two components. So that the vehicle body component made of the composite material may achieve a seamless appearance effect at a connecting position, visual delicacy of the vehicle body component is enhanced, and overall vehicle appearance quality is improved.

Furthermore, configuration of the width k of each connecting portion may ensure reliability of a connection between the two components. The layers in the two connecting portions are spliced in a one-to-one correspondence, and the seams of the adjacent layers are staggered along the connecting direction between the first component and the second component, so that the two connecting portions can be spliced in a staggered manner, and the layers in the two connecting portions may achieve better contact with each other, so as to further ensure the reliability of the connection between the two components.

In addition, configuration of the width t of the seam can reserve a dimensional deformation space for the layers during curing, and a contact area between adjacent layers is ensured at the same time, so as to better improve the reliability of the connection between the two components. Configuration of the distance L between the adjacent seams can reduce impact of a position of the seam on a connection strength between the layers spliced in a staggered manner, and the reliability of the connection between the two components may be further improved. Using a carbon fiber composite material for the first component and the second component is technologically mature, cost is relatively low, and a structural performance requirement of vehicle body component can be further met.

Another objective of the present disclosure is to propose a manufacturing method of a vehicle body component. The method includes:
molding a first component and a second component respectively, each of the first component and the second component including a body portion and a connecting portion, wherein a material of each of the first component and the second component includes a composite material, the first component and the second component both include a plurality of stacked layers, and the layers in each body portion are cured together; and
placing the first component and the second component in a mold, and after the layers in the two connecting portions are spliced in a staggered manner, curing and connecting the two connecting portions together.

Further, the molding the first component and the second component respectively, each of the first component and the second component including the body portion and the connecting portion, includes:
laying the layers, used to constitute the first component and the second component, as required, wherein resin is applied to a position of the layer serving as the body portion during laying, and resin application is omitted from a position of the layer serving as the connecting portion; and
performing isolation protection on the position of the layer serving as the connecting portion, and curing the position of the layer serving as the body portion by performing an autoclave process or an HP-RTM process.

Further, the material of each of the first component and the second component includes a carbon fiber composite material; and
the layers in the two connecting portions are spliced in a one-to-one correspondence, seams of adjacent layers are staggered along a connecting direction between the first component and the second component, and the resin is applied to each spliced layer.

Further, the two connecting portions are cured and connected by baking with a heater.

Further, the heater includes an infrared heater.

Further, one side of each of the first component and the second component is attached to the mold, and a vacuum bag with an air nozzle is laid on another side of the first component and another side of the second component; and
a sealing strip is provided between the body portions, of the first component and the second component, and the mold as well as between the body portions, of the first component and the second component, and the vacuum bag, and after vacuumization is performed through the air nozzle, the two spliced connecting portions are baked and cured.

Further, on a side, facing the vacuum bag, of the two connecting portions, an isolation film and a breathable sticker are sequentially provided along a direction pointing to the vacuum bag; and/or,
a release fabric is provided between the first component and the mold as well as between the second component and the mold.

According to the manufacturing method of the vehicle body component in the present disclosure, the first component and the second component are first molded, each of the first component and the second component including the body portion and the connecting portion, and then after being spliced in a staggered manner, the layers in the two connecting portions are cured and connected together. So that the two components are connected, the vehicle body component made of the composite material may achieve a seamless appearance effect at a connecting position, visual delicacy of the vehicle body component is enhanced, and overall vehicle appearance quality is improved.

In addition, the present disclosure further proposes a vehicle, and the vehicle is provided with the vehicle body component as described aforementioned.

Further, the vehicle body component is a vehicle body outer covering member, the first component is a side outer panel, and the second component is a roof outer panel.

The vehicle of the present disclosure has the same beneficial effect as the aforementioned-mentioned vehicle body component, and the beneficial effect are repeated here.

### BRIEF DESCRIPTION OF THE DRAWINGS

The accompanying drawings form a part of the present disclosure, and are used to provide a further understanding of the present disclosure. The schematic embodiments of the present disclosure and descriptions of the schematic embodiments are used to explain the present disclosure. The schematic embodiments and the descriptions of the schematic embodiments do not constitute an improper limitation of the present disclosure. In the drawings:
FIG. 1 is a schematic structural diagram of a vehicle body component according to an embodiment of the present disclosure;
FIG. 2 is a schematic structural diagram of a first component according to an embodiment of the present disclosure;
FIG. 3 is a schematic diagram of a manufacturing method of a vehicle body component according to an embodiment of the present disclosure.

### Reference signs:

1. first component; 2. second component; 3. mold; 4. sealing strip; 5. release fabric; 6. vacuum bag; 7. isolation film; 8. breathable sticker; 9. air nozzle; 10. heater;
1a. first body portion; 1b. first connecting portion; 2a. second body portion; 2b. second connecting portion; c. layer; f. seam; k. width of connecting portion; t. width of seam; L. distance between seams.

### DETAILED DESCRIPTIONS OF THE EMBODIMENTS

It should be noted that the embodiments of the present disclosure and the features in the embodiments may be combined with each other without conflict.

The present disclosure is described in detail below with reference to the accompanying drawings and embodiments.

### Embodiment 1

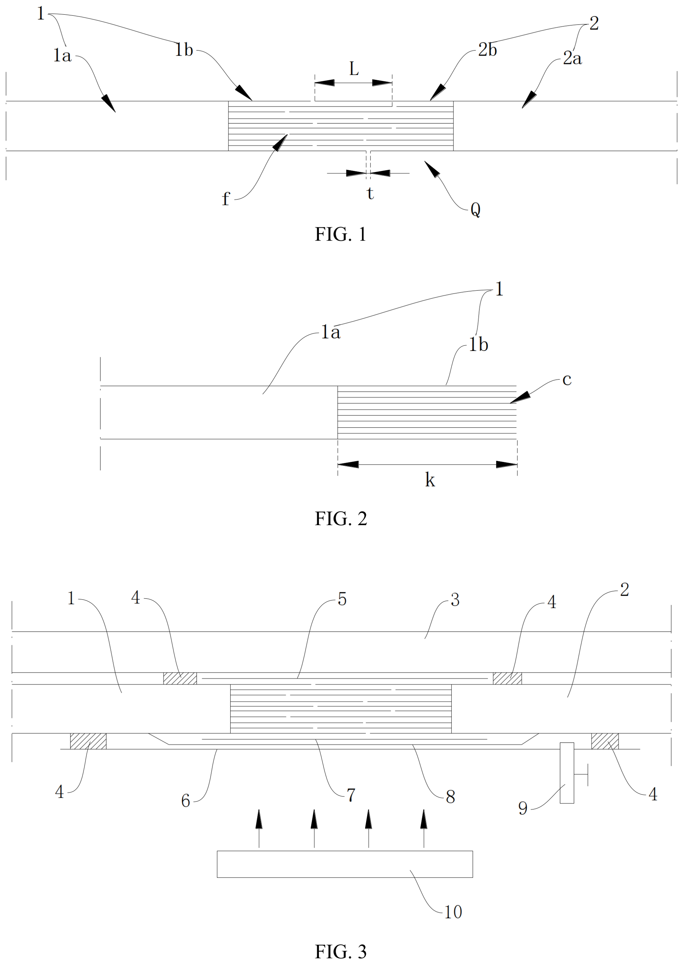

The embodiment relates to a vehicle body component. As shown in FIG. 1, the vehicle body component includes a first component 1 and a second component 2 connected with the first component 1. A material of each of the first component 1 and the second component 2 includes a composite material, and the first component 1 and the second component 2 both include a plurality of stacked layers c. Each of the first component 1 and the second component 2 includes a connecting portion, located in a connecting region Q between the first component 1 and the second component 2, and a body portion located outside the connecting portion.

The layers c in the body portion of the first component 1 are cured together, and the layers c in the body portion of the second component 2 are cured together. In the connecting region Q, the layers c in the connecting portion of the first component 1 and the layers c in the connecting portion of the second component 2 are spliced in a staggered manner, and the layers c in the connecting portion of the first component 1 and the layers c in the connecting portion of the second component 2 are cured and connected together. So that a connection between the first component 1 and the second component 2 is realized, so as to form the vehicle body component of the embodiment.

According to the aforementioned structure, the layers c in the connecting portion of the first component 1 and the layers c in the connecting portion of the second component 2 are spliced in a staggered manner, and then the layers c in the connecting portion of the first component 1 and the layers c in the connecting portion of the second component 2 are cured and connected together, so that the first component 1 and the second component 2 are connected. According to the embodiment, the vehicle body component made of the composite material may achieve a seamless appearance effect at a connecting position, and appearance quality of the vehicle body component may be improved.

Based on the aforementioned overall introduction, in detail, as a preferred implementation form, the vehicle body component of the embodiment may be specifically made of a carbon fiber composite material. That is, each of the first component 1 and the second component 2 is made of the carbon fiber composite material. In this way, using the carbon fiber composite material for the first component 1 and the second component 2 is technologically mature, cost is relatively low, and a structural performance requirement of vehicle body component can be further met.

Of course, besides the carbon fiber composite material, both the first component 1 and the second component 2 constituting the vehicle body component in the embodiment may alternatively be made of another composite material, as long as the first component 1 and the second component 2 also include a plurality of stacked layers c, the connection between different components is realized through a curing process, and a corresponding structural shape of the component is realized.

In the embodiment, as a preferred implementation form, the vehicle body component formed by connecting the first component 1 and the second component 2 may be, for example, a covering member in a vehicle body. At this time, the covering member may be, for example, a vehicle body outer covering member, and the vehicle body outer covering member includes a side outer panel and a roof outer panel connected with the side outer panel in the vehicle body. Thus, the first component 1 and the second component 2 are respectively the side outer panel and the roof outer panel. Meanwhile, by adopting a structural design of the embodiment, a seamless appearance effect at a connecting position between the side outer panel and the roof outer panel may be achieved.

Of course, it should be pointed out that besides the vehicle body outer covering member including the side outer panel and the roof outer panel, the vehicle body component of the embodiment may alternatively be another structure also serving as a vehicle body outer covering member. Moreover, besides being a vehicle body covering member, the vehicle body component of the embodiment may alternatively be other components, made of the carbon fiber composite material, in the vehicle. Application of the vehicle body component is not limited in the embodiment.

In the embodiment, for convenience of description, the body portion and the connecting portion in the first component 1 are specifically referred to as a first body portion 1a and a first connecting portion 1b, respectively. Similarly, the body portion and the connecting portion in the second component 2 are referred to as a second body portion 2a and a second connecting portion 2b, respectively.

Furthermore, continuing to refer to FIG. 2, as a preferred implementation form, taking the first connecting portion 1b in the first component 1 as an example, a width k of each connecting portion along a connecting direction between the first component 1 and the second component 2 in the embodiment may generally be between 25 mm and 75 mm.

Here, the aforementioned connecting direction between the first component 1 and the second component 2 is, for example, a left-right direction in FIG. 1. Configuration of the width k of each connecting portion may ensure reliability of the connection between the first component 1 and the second component 2. In addition, in a specific implementation, based on the number of layers c in the first component 1 and the number of layers c in the second component 2, the aforementioned width k may be, for example, 25 mm, 30 mm, 32 mm, 35 mm, 40 mm, 45 mm, 50 mm, 55 mm, 60 mm, 65 mm, 70 mm, 75, and the like. In a case where the number of layers c is relatively large, the width k may be assigned a relatively large value. In a case where the number of layers c is relatively small, the width k may be assigned a relatively small value.

As shown in FIG. 1, as a preferred implementation form, in the connecting region Q of the embodiment, the layers c in the first connecting portion 1b and the layers c in the second connecting portion 2b are specifically spliced in a one-to-one correspondence, and seams f of adjacent layers c are staggered along a connecting direction between the first component 1 and the second component 2.

In this way, it can be understood that the layers c in the two connecting portions are spliced in a one-to-one correspondence, and the seams f of the adjacent layers c are staggered along the connecting direction between the first component and the second component, so that the two connecting portions can be spliced in a staggered manner, and the layers c in the two connecting portions may achieve better contact with each other, so as to further ensure the reliability of the connection between the first component 1 and the second component 2.

Of course, it should be noted that besides preferred one-to-one splicing of the layers c in the two connecting portions, during a specific implementation, based on a specific condition such as a thickness of the layer c, two or more layers c in one connecting portion may be stacked and then stagger-spliced with a plurality of similarly stacked layers c in the other connecting portion.

In the embodiment, still referring to FIG. 1, as a preferred implementation form, a width t of the aforementioned seam f along the connecting direction between the first component 1 and the second component 2 may generally be less than or equal to 1 mm. Configuration of the width t of the seam f can reserve a dimensional deformation space for the layers c during curing, and a contact area between adjacent layers c is ensured at the same time, so as to better improve the reliability of the connection between the first component 1 and the second component 2.

In a specific implementation, the aforementioned width t of the seam f may be, for example, 0.5 mm, 0.8 mm or 1 mm, and generally, 1mm is preferred.

In the embodiment, still referring to FIG. 1, as a preferred implementation form, a distance L between the seams f of adjacent layers c along the connecting direction of the first component 1 and the second component 2 may be greater than or equal to 25 mm.

In this way, configuration of the distance L between the adjacent seams f can reduce impact of a position of the seam f on a connection strength between the layers spliced in a staggered manner, and the reliability of the connection between the first component 1 and the second component 2 may be further improved at the same time. In a specific implementation, the aforementioned distance L may be, for example, 25 mm, 28 mm, 30 mm, 32 mm, 35 mm, and the like.

For a specific manufacturing method of the vehicle body component of the embodiment, reference can be made to the description in Embodiment 2 below.

According to the vehicle body component in the embodiment, the layers c in the connecting portion of the first component 1 and the layers c in the connecting portion of the second component 2 are spliced in a staggered manner, and then the layers c in the two connecting portions are cured and connected together, thereby connecting the two components. So that the vehicle body component made of the composite material may achieve a seamless appearance effect at a connecting position, visual delicacy of the vehicle body component is enhanced, overall vehicle appearance quality is improved, and the solution has good practicability.

### Embodiment 2

The embodiment relates to a manufacturing method of a vehicle body component. the manufacturing method is specifically used to manufacture the vehicle body component in Embodiment 1. Combined with the introduction in Embodiment 1, the manufacturing method of the embodiment includes the following steps.

Step s01: Molding a first component 1 and a second component 2 respectively, each of the first component 1 and the second component 2 including a body portion and a connecting portion.

As mentioned in Embodiment 1, a material of each of the first component 1 and the second component 2 includes a composite material, and the first component 1 and the second component 2 both include a plurality of stacked layers c. The layers c in each body portion are cured together. Preferably, each of the first component 1 and the second component 2 can be specifically made of a carbon fiber composite material.

In addition, during a specific manufacturing process, when the first component 1 and the second component 2 are molded respectively, the layers c used to constitute the first component 1 and the second component 2 are laid as required. As shown in FIGS. 1 and 2, in the first component 1 and the second component 2, resin is applied to a position of the layer c serving as the body portion during laying, while resin application is omitted from a position of the layer c serving as the connecting portion initially.

Then, after isolation protection is performed on the position of the layer c serving as the connecting portion, the position of the layers c serving as the body portion may be cured by performing an autoclave process or a high pressure-resin transfer molding (HP-RTM) process. In this way, curing of the body portion in the first component 1 and curing of the body portion in the second component 2 is completed, the connecting portions for connection are retained in the two components, and the layers c in the connecting portion are still in a layable state.

Step s02: Place the first component (1) and second component (2) in a mold (3), and after the layers c in the two connecting portions are spliced in a staggered manner, the two connecting portions are cured and connected together.

In the Step s02, specifically, as still mentioned in Embodiment 1, referring to FIG. 1 and further combining with FIG. 3, preferably, the layers c in the connecting portion of the first component 1 and the layers c in the connecting portion of the second component 2 are spliced in a one-to-one correspondence, and seams f of adjacent layers c are staggered along a connecting direction between the first component 1 and the second component 2.

At the same time, similar to the cured body portion, the resin may be further applied to each spliced layer c. After the layers c in the two connecting portions are spliced in a staggered manner, in the embodiment, the two connecting portions may be further baked by a heater 10 to accelerate resin curing. So that a curing connection between the two connecting portions is realized.

In addition, in Step s02, the first component 1 and the second component 2 may generally be positioned on the mold 3 through a tooling fixture. The mold 3 is usually provided with a profiling surface made corresponding to an appearance surface at a component split member of a vehicle model, so that after a position at the connecting region Q is cured, a required appearance surface may be formed.

After being positioned on the mold 3, the layers c can be laid in sequence according to a design drawing, so that as shown in FIG. 3, the layers c in the two connecting portions are spliced in a one-to-one correspondence, and seams f of adjacent layers c are staggered along a connecting direction between the first component 1 and the second component 2. Of course, during laying, a width t of the seam f may generally be 1 mm, a distance L between the seams f of adjacent layers may be greater than or equal to 25 mm, and at the same time, a layer of resin needs to be applied to each laid layer c.

After the first component 1 and the second component 2 are completely laid up, one side of each of the first component 1 and the second component 2 is attached to the mold 3, and the side is corresponding to a side attached to the mold 3. In the embodiment, a vacuum bag 6 with an air nozzle 9 is laid on another side of the first component 1 and another side of the second component 2. Meanwhile, a sealing strips 4 is provided between the body portions, of the first component 1 and the second component 2, and the mold 3 as well as between the body portions, of the first component 1 and the second component 2, and the vacuum bag 6. By providing the sealing strip 4 on both sides, a sealed space may be formed at a position in the connecting region Q, so that after a vacuum is drawn through the air nozzle 9, the two spliced connecting portions can be baked and cured by the heater 10.

It should be noted that during a specific implementation, when a vacuum is drawn through the air nozzle 9, the sealing strip 4 on a side on which the vacuum bag 6 is located should be pressed to ensure a sealing effect of the vacuum bag 6. In a process of connecting the air nozzle 9 to a vacuum pump and drawing a vacuum, the vacuum bag 6 should further be continuously arranged to keep the vacuum bag 6 flat, and at the same time, the vacuum bag 6 be checked for air leakage between the vacuum bag 6 and the sealing strip 4. When a set vacuum standard is achieved, the air nozzle 9 may be closed, and the vacuum pump may be stopped.

As a preferred implementation form, in the embodiment, further, on a side, facing the vacuum bag 6, of the two connecting portions, an isolation film 7 and a breathable sticker 8 may be sequentially provided along a direction pointing to the vacuum bag 6. Through arrangement of the isolation film 7 and the breathable sticker 8, the resin-coated layers c may be prevented from adhering to the vacuum bag 6, and a curing effect of the two connecting portions spliced in a staggered manner may be further ensured during heating and baking. In a specific implementation, the aforementioned isolation film 7 and the breathable sticker 8 may both adopt conventional products used in preparation of a carbon fiber composite material component.

In addition, as a preferred implementation form, a release fabric 5 may further be provided between the first component 1 and the mold 3 as well as between the second component 2 and the mold 3 in the embodiment. So that after the first component 1 and the second component 2 are cured, the connected first component 1 and second component 2 can be easily separated from the mold 3. The aforementioned heater 10 is preferably an infrared heater. A heating temperature and a heating duration of the heater, as well as the vacuum standard during the aforementioned vacuumizing, can be specifically selected based on the number of layers c and other factors.

According to the manufacturing method of the vehicle body component of the embodiment, the first component 1 and the second component 2 are first molded, each of the first component 1 and the second component 2 includes the body portion and the connecting portion, and after being spliced in a staggered manner, the layers c in the two connecting portions are cured and connected together. So that the two components are connected, the vehicle body component made of the composite material may achieve a seamless appearance effect at a connecting position, visual delicacy of the vehicle body component is enhanced, and overall vehicle appearance quality is improved.

In addition, it should be pointed out that after the connecting region Q between the first component 1 and the second component 2 is completely cured, further, local polishing and trimming can be performed, and painting can be performed along with the vehicle, so that the vehicle provided with the vehicle body component manufactured by the embodiment achieves better appearance quality.

### Embodiment 3

The embodiment relates to a vehicle provided with the vehicle body component in Embodiment 1.

As mentioned in Embodiment 1, in the vehicle of the embodiment, the aforementioned vehicle body component can be, for example, a vehicle body outer covering member including a side outer panel and a roof outer panel, and the like. Meanwhile, besides being a vehicle body outer covering member, the aforementioned vehicle body component can alternatively be other components made of a composite material in the vehicle, and the composite material is preferably a carbon fiber composite material.

The vehicle of the embodiment is provided with the vehicle body component in Embodiment 1, so that the vehicle body component made of the composite material may achieve a seamless appearance effect at a connecting position, visual delicacy of the vehicle body component is enhanced, and overall vehicle appearance quality is improved.

The aforementioned are only preferred embodiments of the present disclosure and are not intended to limit the present disclosure. Any modification, equivalent replacement, improvement, and the like, made within the spirit and principle of the present disclosure shall be included in the protection scope of the present disclosure.

## Claims

1. A vehicle body component, comprising:
a first component (1) and a second component (2) connected with the first component (1), wherein a material of each of the first component (1) and the second component (2) comprises a composite material, the first component (1) and the second component (2) both comprise a plurality of stacked layers (c), and each of the first component (1) and the second component (2) comprises a connecting portion, located in a connecting region (Q) between the first component (1) and the second component (2), and a body portion located outside the connecting portion, wherein
the layers (c) in each body portion are cured together, and in the connecting region (Q), the layers (c) in the two connecting portions are spliced in a staggered manner, and the layers (c) in the two connecting portions are cured and connected together.

2. The vehicle body component according to claim 1, wherein
a width k of each connecting portion along a connecting direction between the first component (1) and the second component (2) is between 25 mm and 75 mm.

3. The vehicle body component according to claim 1, wherein
in the connecting region (Q), the layers (c) in the two connecting portions are spliced in a one-to-one correspondence, and seams (f) of adjacent layers (c) are staggered along a connecting direction between the first component (1) and the second component (2).

4. The vehicle body component according to claim 1, wherein
in the connecting region (Q), the plurality of layers (c) in one of the connecting portions are stacked and then are spliced with the plurality of stacked layers (c) in the other connecting portion in a staggered manner.

5. The vehicle body component according to claim 3, wherein
a width t of the seam (f) along the connecting direction between the first component (1) and the second component (2) is less than or equal to 1 mm; and/or,
a distance L between the seams (f) of adjacent layers (c) along the connecting direction between the first component (1) and the second component (2) is greater than or equal to 25 mm.

6. The vehicle body component according to any one of claims 1 to 5, wherein
the material of each of the first component (1) and the second component (2) comprises a carbon fiber composite material.

7. A manufacturing method of a vehicle body component, comprising:
molding a first component (1) and a second component (2) respectively, each of the first component (1) and the second component (2) comprising a body portion and a connecting portion, wherein a material of each of the first component (1) and the second component (2) comprises a composite material, the first component (1) and the second component (2) both comprise a plurality of stacked layers (c), and the layers (c) in each body portion are cured together; and
placing the first component (1) and the second component (2) in a mold (3), and after the layers (c) in the two connecting portions are spliced in a staggered manner, curing and connecting the two connecting portions together.

8. The manufacturing method of the vehicle body component according to claim 7, wherein the molding the first component (1) and the second component (2) respectively, each of the first component (1) and the second component (2) comprising the body portion and the connecting portion, comprises:
laying the layers (c), used to constitute the first component (1) and the second component (2), as required, wherein resin is applied to a position of the layer (c) serving as the body portion during laying, and resin application is omitted from a position of the layer (c) serving as the connecting portion; and
performing isolation protection on the position of the layer (c) serving as the connecting portion, and curing the position of the layer (c) serving as the body portion by performing an autoclave process or an HP-RTM process.

9. The manufacturing method of the vehicle body component according to claim 7 or 8, wherein
the material of each of the first component (1) and the second component (2) comprises a carbon fiber composite material; and
the layers (c) in the two connecting portions are spliced in a one-to-one correspondence, seams (f) of adjacent layers (c) are staggered along a connecting direction between the first component (1) and the second component (2), and the resin is applied to each spliced layer (c).

10. The manufacturing method of the vehicle body component according to claim 9, wherein
the two connecting portions are cured and connected by baking with a heater (10).

11. The manufacturing method of the vehicle body component according to claim 10, wherein
the heater (10) comprises an infrared heater.

12. The manufacturing method of the vehicle body component according to claim 9, wherein
one side of each of the first component (1) and the second component (2) is attached to the mold (3), and a vacuum bag (6) with an air nozzle (9) is laid on another side of the first component (1) and another side of the second component (2); and
a sealing strip (4) is provided between the body portions, of the first component (1) and the second component (2), and the mold (3) as well as between the body portions, of the first component (1) and the second component (2), and the vacuum bag (6), and after vacuumization is performed through the air nozzle (9), the two spliced connecting portions are baked and cured.

13. The manufacturing method of the vehicle body component according to claim 12, wherein
on a side, facing the vacuum bag (6), of the two connecting portions, an isolation film (7) and a breathable sticker (8) are sequentially provided along a direction pointing to the vacuum bag (6); and/or,
a release fabric (5) is provided between the first component (1) and the mold (3) as well as between the second component (2) and the mold (3).

14. A vehicle, comprising the vehicle body component according to any one of claims 1 to 6.

15. The vehicle according to claim 14, wherein
the vehicle body component is a vehicle body outer covering member, the first component (1) is a side outer panel, and the second component (2) is a roof outer panel.
